(19) Europäisches Patentamt
European Patent Office
Office européen des brevets

(11) **EP 3 698 236 B1**

(12) **FASCICULE DE BREVET EUROPEEN**

(45) Date de publication et mention
de la délivrance du brevet:
**07.12.2022 Bulletin 2022/49**

(21) Numéro de dépôt: **18793394.0**

(22) Date de dépôt: **19.10.2018**

(51) Classification Internationale des Brevets (IPC):
**G06F 3/147** *(2006.01)*     **G06F 3/023** *(2006.01)*
**G06F 3/038** *(2013.01)*     **G06F 3/033** *(2013.01)*

(52) Classification Coopérative des Brevets (CPC):
**G06F 3/023; G06F 3/033; G06F 3/038;** G06F 3/147;
G06F 2203/0382

(86) Numéro de dépôt international:
**PCT/EP2018/078792**

(87) Numéro de publication internationale:
**WO 2019/077142 (25.04.2019 Gazette 2019/17)**

(54) **SYSTÈME ET PROCÉDÉ POUR LA GESTION SIMULTANÉE D'UNE PLURALITÉ DE PÉRIPHÉRIQUES DE DÉSIGNATION**

SYSTEM UND VERFAHREN ZUR GLEICHZEITIGEN VERWALTUNG EINER VIELZAHL VON DESIGNATIONSPERIPHERIEGERÄTEN

SYSTEM AND METHOD FOR SIMULTANEOUSLY MANAGING A PLURALITY OF DESIGNATION PERIPHERALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA TN**

(30) Priorité: **19.10.2017 FR 1759852**

(43) Date de publication de la demande:
**26.08.2020 Bulletin 2020/35**

(73) Titulaire: **Immersion
33100 Bordeaux (FR)**

(72) Inventeurs:
• **CASTET, Julien**
  **33130 Begles (FR)**
• **SEMELLE, Loic**
  **33450 Saint Loubes (FR)**
• **KERVEGANT, Cédric**
  **33700 Merignac (FR)**

(74) Mandataire: **Ipside
7-9 Allées Haussmann
33300 Bordeaux Cedex (FR)**

(56) Documents cités:
CN-A- 102 314 253          DE-A1-102013 202 818
DE-A1-102014 206 745      US-A1- 2009 319 099
US-A1- 2012 038 561

• Anonymous: "KVM Splitter - Wikipedia", last edited on 24 December 2015 , 24 décembre 2015 (2015-12-24), XP055449691, Extrait de l'Internet: URL:https://en.wikipedia.org/wiki/KVM_Spli tter [extrait le 2018-02-09]
• Anonymous: "NTI VOPEX Touch Screen Sharer NTI VOPEX-4MM-BI Touch Screen Sharer", Copyright © 2015 , 31 décembre 2015 (2015-12-31), XP055449698, Extrait de l'Internet: URL:http://archive.42u.com/nti-touch-scree n-splitter.htm [extrait le 2018-02-09]
• Anonymous: "Serial Touch Screen KVM Splitters and Multiplexers for 4 Workstations from Vetra, VIP-884-KMV-TS", Copyright © 1995 - 2003 , 31 décembre 2003 (2003-12-31), XP055449701, Extrait de l'Internet: URL:http://www.vetra.com/884TStext.html [extrait le 2018-02-09]

- Anonymous: "Two Workstation Touch Monitor KVM Splitter-Multiplexer with Extension", Copyright © 1995-2001 , 31 décembre 2001 (2001-12-31), XP055449702, Extrait de l'Internet: URL:http://www.vetra.com/382TStext.html [extrait le 2018-02-09]

## Description

DOMAINE DE L'INVENTION

L'invention appartient au domaine des systèmes informatiques et en particulier des interfaces homme machine.

L'invention concerne en particulier un système et un procédé pour la gestion de plusieurs périphériques de désignation par lesquels un opérateur interagit avec un ordinateur, lorsque ces périphériques de désignation sont connectés simultanément dans un même système informatique.

ART ANTERIEUR

Dans le domaine des périphériques permettant à un utilisateur d'un système informatique d'agir sur ledit système informatique, il est connu de mettre en œuvre des dispositifs actionnés par l'utilisateur pour interagir sur un écran avec des éléments graphiques.

Parmi ces dispositifs on trouve en particulier les claviers, les souris, les stylets, les tablettes tactiles ou encore les écrans tactiles.

Afin d'assurer le fonctionnement de ces dispositifs avec de nombreux systèmes informatiques, ces dispositifs communiquent avec le système informatique en envoyant des trames de données formatées suivant un protocole normalisé dit HID (« Human Interface Device »).

Généralement les actions réalisées par l'opérateur, par l'intermédiaire de ces dispositifs, sont visualisées sur une ou plusieurs surfaces d'affichage du système informatique. Cela permet à l'opérateur d'agir en fonction de ses besoins d'interaction, telles que sélection, validation, tracés...

Il est possible de connecter au même système informatique plusieurs de ces dispositifs, par exemple plusieurs claviers ou plusieurs souris, mais dans ces cas, un seul des dispositifs redondants est utilisable à un instant donné. Ainsi, une souris permet d'agir sur la position d'un pointeur sur la surface d'affichage et la position du pointeur devient pratiquement impossible à gérer si plusieurs souris sont activées simultanément.

Ce cas n'est pas en pratique pénalisant lorsqu'il n'est pas nécessaire d'utiliser deux souris simultanément même lorsqu'elles sont connectées, comme par exemple sur un poste informatique mono-utilisateur. En revanche, cela interdit que deux personnes utilisent chacune une souris sur un même poste informatique dans le contexte d'un travail collaboratif.

Dans le cas des systèmes de désignation du type écran tactile ou tablette graphique, il peut être souhaité d'agir simultanément sur les surfaces sensibles de ces systèmes.

Ainsi il est maintenant répandu l'utilisation d'écrans tactiles qui sont adaptés à détecter et à gérer plusieurs points de contact simultanés pour obtenir des effets particuliers par le logiciel qui utilise les informations des points de contacts. Cependant, cette possibilité de contacts multiples est aujourd'hui réservée à une unique surface tactile et il n'est pas possible, sans traitement informatique spécifique, d'agir simultanément sur des surfaces tactiles différentes.

Cette limitation tient à la difficulté de combiner des liaisons individuelles et normalisées entre les périphériques de désignation et l'unité centrale du système informatique.

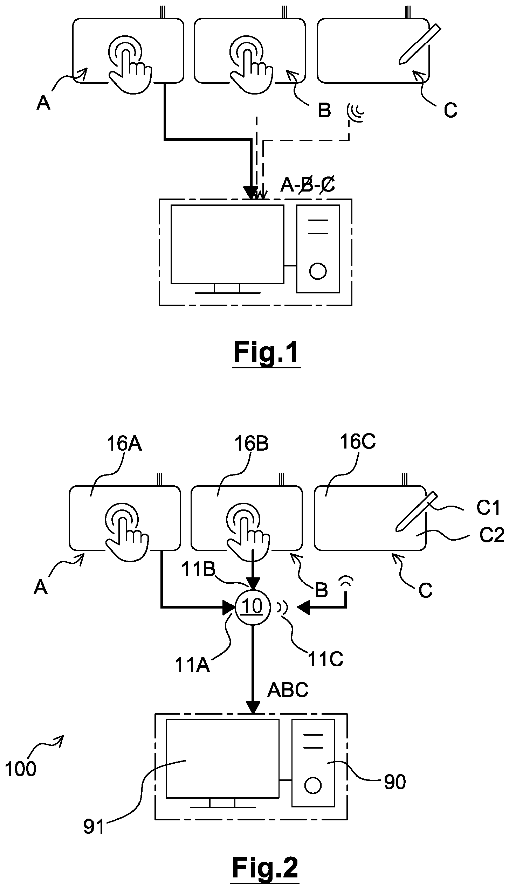

Lorsque le système informatique comporte plusieurs périphériques de désignation (A, B, C), ces différents périphériques sont connectés chacun à l'unité centrale individuellement par une liaison dédiée, aujourd'hui le plus souvent une liaison USB (« Universal Serial Bus »), comme illustré sur la figure 1.

Il est alors nécessaire dans cette configuration matérielle et logique, de cesser d'agir avec un périphérique de désignation pour pouvoir agir avec un autre, du moins de manière satisfaisante sur le plan fonctionnel.

Pour que les périphériques de désignation soient les plus indépendants possible du système informatique auquel ils sont raccordés, une norme HID spécifique, superposée à la norme USB, définit le contenu et la structure des données échangées entre le terminal et l'unité centrale.

Un inconvénient de cette architecture vient de ce qu'il n'est pas possible de prendre en compte des actions simultanées sur plusieurs périphériques de désignation sans conflit dans le contexte d'actions coordonnées du ou des opérateurs.

Pour résoudre ce problème, des solutions logicielles ont été développées, mais ces solutions sont spécifiques du système d'exploitation et de l'application mis en œuvre.

Il est alors perdu les qualités d'universalité qui sont attendues des périphériques de désignation, en particulier des dispositifs à écrans tactiles et des tablettes graphiques, par les utilisateurs des systèmes informatiques.

On connait des séparateurs KVM (claviers, moniteurs vidéo et souris), également appelé commutateurs KVM inversés (voir l'article Wikipédia « KVM Splitter »). Ces dispositifs permettent à un utilisateur de contrôler un unique ordinateur à partir d'un ou plusieurs ensembles clavier - moniteur - souris, et comportent à cet effet des entrées, des sorties et des moyens de traitement numérique adaptés. Les séparateurs KVM permettent un accès à l'ordinateur de façon consécutive, et non simultanée, via les différents ensembles de contrôle.

D'autres dispositifs similaires sont décrits dans les documents : « Serial Touch Screen KVM Splitters and Multiplexers for 4 Workstations from Vetra, VIP-884-KMV-TS » ; « Two Workstation Touch Monitor KVM Splitter-Multiplexer with Extension » ; DE 102013202818A1 et US 2009/319099 A1.

Il existe également un dispositif connu de la marque déposée VOPEX qui permet à plusieurs moniteurs de communiquer avec un même CPU, comme décrit dans « NTI VOPEX Touch Screen Sharer NTI VOPEX-4MM-BI Touch Screen Sharer ». Ce dispositif offre trois modes de fonctionnements. Parmi ces modes, le mode « INST mode » permet à plusieurs utilisateurs d'avoir un accès instantané au contrôle du CPU mais à condition que ce soit un utilisateur à la fois.

Le document CN 102314253 A décrit un dispositif électronique portable et un procédé de fonctionnement de celui-ci. Le dispositif électronique portable comprend une pluralité d'écrans tactiles et un circuit de commande d'écran, dans lequel chaque écran tactile génère un signal tactile ou non selon l'état enfoncé dudit écran ; le circuit de commande d'écran combine les points tactiles des écrans tactiles en un ensemble de points et définit les points tactiles des écrans tactiles selon un point de référence ; en outre, le circuit de commande d'écran convertit le signal tactile en une valeur de coordonnées sous l'ensemble de points selon le point de référence, de sorte que le dispositif électronique portable effectue une opération correspondante selon la valeur de coordonnées. Ce document cherche à apporter une solution au problème de multiplication des circuits de commandes dans le cas de plusieurs écrans tactiles dans un même dispositif électronique portable tel qu'un smartphone à clapet ou à glissière, mais ne résout pas le problème de mise à l'échelle lié à l'utilisation de plusieurs écrans tactiles.

Le document DE 102014206745 A1 décrit quant à lui un procédé et un module de distribution pour connecter une pluralité d'écrans tactiles à un système informatique, dans lequel un écran tactile total virtuel est simulé par rapport au système informatique, et le module de distribution divise les signaux graphiques du système informatique à l'écran tactile total virtuel en signaux graphiques pour au moins deux sous-zones qui sont respectivement affichés sur des écrans tactiles individuels connectés au module de distribution, les signaux d'événements tactiles étant transmis au système informatique converti en direction opposée aux sous-zones de l'écran tactile total virtuel. Selon ce document, les signaux graphiques issus du système informatique sont répartis dans un module de distribution de telle sorte que les écrans tactiles réels connectés au module de distribution représentent chacun une zone partielle de l'ensemble de l'écran tactile virtuel. Ce document ne décrit pas non plus de moyen de mise à l'échelle.

Le document US 2012/0038561 A1 décrit un procédé d'affichage comprenant : l'affichage d'une image sur une pluralité d'écrans tactiles ; la réception d'une pluralité d'éléments d'information d'entrée tactile en provenance de la pluralité d'écrans tactiles ; si des éléments respectifs de la pluralité d'éléments d'informations d'entrée tactile sont reçus de différents écrans tactiles parmi la pluralité d'écrans tactiles, l'exécution d'une opération tactile multiple par rapport à l'image. L'affichage de l'image sur la pluralité d'écrans tactiles consiste à diviser ladite image pour que chaque écran tactile en affiche une partie (comme un puzzle) et non à l'afficher entière sur chaque écran tactile.

## PRÉSENTATION DE L'INVENTION

La présente invention apporte une solution à ces problèmes de mise en œuvre simultanée d'une pluralité de périphériques de désignation à surface active par un système informatique. Cela au moyen d'un recomposeur agençant les données émises par une pluralité de périphériques de désignation à surface active, en un ensemble de données comportant l'ensemble des données caractérisant les actions réalisées par un opérateur sur les surfaces actives des différents périphériques de désignation et ayant la structure des données qui sont émises par un unique périphérique de désignation.

Pour cela l'invention concerne un recomposeur comme défini dans la revendication 1, pour connecter une pluralité de périphériques de désignation à une même unité centrale d'un système informatique.

Le recomposeur selon l'invention:

- comporte des entrées pour recevoir, de chacun des périphériques de désignation, lorsque ledit périphérique de désignation est connecté au recomposeur, des données normalement échangées avec l'unité centrale lorsque ledit périphérique de désignation est connecté directement à l'unité centrale ;
- comporte une sortie pour émettre des données vers l'unité centrale, lorsque le recomposeur est connecté à l'unité centrale ;
- comporte des moyens de traitement numérique configurés pour transformer les données reçues en entrées du recomposeur en données émises en sortie du recomposeur ;

les données émises en sortie étant conformes en contenu et en structure à des données qui seraient émises par un périphérique de désignation comportant une surface active unique ; les données émises en sortie caractérisant individuellement, à chaque instant, sur la surface active unique, des actions réalisées avec les périphériques de désignation, actions caractérisées par les données reçues en entrées.

En échangeant les données avec le recomposeur, l'unité centrale n'est plus confrontée aux incohérences et aux conflits rencontrés lorsque la pluralité de périphériques de désignation est directement connectée à l'unité centrale. Le recomposeur ayant transformé les données reçues des différents périphériques de désignation, pour leur donner les valeurs et la structure correspondant à leur génération par un seul périphérique de désignation combinant les caractéristiques fonctionnelles des différents périphériques de désignation connectés. Le périphérique de désignation combinant lesdites caractéristiques fonctionnelles est comparable à un périphérique de désignation virtuel résultant d'un assemblage numérique des périphériques de désignation réels connectés au recomposeur.

Le recomposeur de l'invention comporte les caractéristiques suivantes :

- au moins un analyseur configuré pour extraire, des données reçues en entrées de chacun des périphériques de désignation connectés audit recomposeur, une table de données variables et de descripteurs dudit périphérique de désignation ;
- au moins un configurateur configuré pour définir des dimensions et position d'une surface active associée à chacun des périphériques de désignation connectés audit recomposeur dans un système de coordonnées de la surface active unique ;
- au moins un contrôleur pour transformer des données variables des données reçues en entrées en données variables des données émises en sortie ;
- au moins un conditionneur configuré pour structurer les données à émettre sur la sortie en accord avec un protocole de communication compris par l'unité centrale à laquelle doit être connecté le recomposeur.

Ces différentes fonctions peuvent être réalisées par un ou plusieurs microcontrôleurs, intégrés dans un boîtier, ou dans un ensemble de boîtiers interconnectés, du recomposeur. La configuration peut être d'un recomposeur indépendant pour être rapidement connecté à une unité centrale sans intervention matérielle sur l'unité centrale, ou montés sur une carte électronique pour être installé à demeure dans une unité centrale.

Selon l'invention, le configurateur, pour chaque surface active associée à un périphérique de désignation connecté au recomposeur, définit des dimensions et une position, dans la surface active unique, d'une zone correspondant à la surface active associée au périphérique de désignation par :

- une mise à l'échelle de chacun d'un axe d'abscisse et d'un axe d'ordonnée de la surface active connus dans un système de coordonnées de cette surface active vers un système de coordonnées de la surface active unique ;
- une position d'un point de référence de la surface active dans le système de coordonnées de la surface active unique.

Chaque surface active associée à un périphérique de désignation se trouve être ainsi définie comme une zone particulière de la surface active unique dans laquelle sont caractérisées les actions d'un opérateur réalisées avec le périphérique de désignation.

Dans une forme de réalisation, des coordonnées d'un point désigné sur la surface active dans le système de coordonnées d'un périphérique de désignation, transmises dans les données variables reçues sur une entrée du recomposeur ou élaborées par le recomposeur à partir de ces données variables reçues, sont transformées en coordonnées dudit point, désigné sur la surface active, dans le système de coordonnées de la surface active unique et incorporées dans les données variables des données émises par la sortie.

Dans une forme de réalisation, le recomposeur est configuré pour recevoir, sur au moins une entrée, des données conformes aux exigences d'une norme ouverte, par exemple la norme USB et la surcouche HID à ladite norme USB.

Dans une forme de réalisation, le recomposeur est configuré pour recevoir, sur au moins une entrée, des données définies par un protocole dit « propriétaire ».

Dans une forme de réalisation, les données émises en sortie sont conformes aux exigences d'une norme ouverte, par exemple la norme USB et la surcouche HID à ladite norme USB.

Dans une forme de réalisation, au moins une entrée correspond à une liaison sans fil à laquelle peut se connecter un périphérique de désignation sans fil, par exemple par liaison radio ou par liaison optique.

L'invention concerne également un ensemble comportant un recomposeur conforme au recomposeur de l'invention et comportant au moins deux périphériques de désignation.

Il est ainsi possible de créer un périphérique de désignation complexe résultant de l'assemblage de plusieurs périphériques de désignation existant et ainsi de créer des surfaces de désignation de plus grandes dimensions résultant d'un assemblage de surfaces de désignation associées à différents périphériques de désignations et ou associant des fonctions ordinairement incompatibles.

Dans une forme de réalisation, au moins un périphérique de désignation de cet ensemble comporte une surface active associée à un écran tactile.

Dans une forme de réalisation, au moins un périphérique de cet ensemble est stylet associé à une surface de désignation.

Dans une forme de réalisation, au moins un périphérique de désignation de cet ensemble est un périphérique de désignation à défilement, tel qu'une souris ou une boule de poursuite, dont les signaux sont traités pour définir une position sur une surface de désignation.

L'invention concerne également un système informatique comportant un tel ensemble, incorporant un recomposeur de l'invention, dans lequel la sortie du recomposeur et connectée à une unité centrale du système informatique.

L'invention s'adresse également à un procédé pour raccorder plusieurs périphériques de désignation à une même unité centrale dans un système informatique, pour permettre l'interopérabilité simultanée desdits périphériques de désignation, comportant les étapes de connecter lesdits périphériques de désignation sur des entrées d'un recomposeur de l'invention et à connecter une sortie de ce recomposeur à l'unité centrale de sorte que les périphériques de désignation connectés au recomposeur sont vus par l'unité centrale comme un seul périphérique de désignation.

Dans un mode de mise en œuvre de ce procédé, le procédé comporte une étape de paramétrage du recomposeur, cette étape de paramétrage comportant de définir un agencement des surfaces actives, associées à chacun des périphériques de désignation connectés, dans la surface active unique.

Il est ainsi possible de réaliser une mise en cohérence de l'agencement physique des surfaces actives avec celui qui leur est affecté virtuellement dans la surface active unique.

PRÉSENTATION DES FIGURES

L'invention est décrite en référence aux figures qui sont données à titre d'un exemple non limitatif d'un mode de réalisation de l'invention, qui représente de manière schématique :

Figure 1 : déjà citée, le principe du fonctionnement « alternatif » de différents périphériques de désignation dans un système informatique dont une unité centrale reçoit des signaux de ces différents périphériques suivant les principes de l'art antérieur ;

Figure 2 : le principe du fonctionnement simultané de différents périphériques de désignation dans un système informatique dont une unité centrale reçoit les signaux de ces différents périphériques par un recomposeur de données suivant l'invention ;

Figure 3 : un exemple d'architecture interne d'une forme de réalisation d'un recomposeur suivant l'invention ;

Figure 4 : une représentation synoptique du traitement des données dans le recomposeur ;

Figure 5 : une représentation des principales étapes du procédé de traitement des données des périphériques de désignation par le recomposeur.

Sur les figures, les dessins des différentes parties du système et de ses composants sont représentés symboliquement.

DESCRIPTION D'UN MODE DÉTAILLÉ DE REALISATION ET DE MISE EN OEUVRE DE L'INVENTION

Le principe général de l'invention est présenté sur le figure 2 qui schématise un système informatique 100 comportant une unité centrale 90 à laquelle est connecté une surface d'affichage 91 et comportant trois périphériques de désignation A, B, C, destinés à être utilisées, simultanément ou non, par un ou plusieurs opérateurs. Il sera noté ici que les périphériques de désignation considérés par la suite sont des périphériques restituant la position d'un pointeur sur une surface d'affichage.

De tels périphériques de désignation mettent en œuvre par exemple des surfaces de désignation pour restituer la position, sur une surface active, ou à proximité et au-dessus de la surface active, d'un pointeur physique tel qu'un doigt ou un stylet.

De tels périphériques de désignation mettent en œuvre, par exemple, des mesures de déplacements d'un curseur, à la manière d'une souris ou d'une boule de poursuite, à partir desquels déplacements il est défini une position d'un pointeur sur une surface d'affichage, notamment par intégration des déplacements.

Il sera compris ici que l'invention s'intègre dans un système informatique conventionnel dans lequel des périphériques dialoguent avec une unité centrale par l'intermédiaire de bus de communication numériques normalisés, par exemple de bus à la norme USB (« Universal Serial Bus ») aujourd'hui largement utilisés.

Bien que d'autres normes de communication « unité centrale - périphérique », existantes ou futures, puissent être mises en œuvre dans l'invention, il sera dans la description fait référence aux bus de communication répondant à la norme USB et également au cas particulier de la surcouche HID (Human Interface Device) à la norme USB.

Les normes applicables, connues de l'Homme du Métier, sont en particulier disponibles auprès de « USB Implementers Forum, Inc. ».

On notera ici que plusieurs périphériques de désignation considérés peuvent être associés à une même surface d'affichage, par exemple dans le cas d'un écran tactile dont une surface de l'écran est supérieure à celles de surfaces actives des périphériques de désignation, et ou peuvent être associés à plusieurs écrans, on peut citer l'exemple d'écrans tactiles juxtaposés.

La surface d'affichage 91 de la figure 2 est donc une représentation symbolique d'un dispositif d'affichage qui comporte un ou plusieurs écrans, cet aspect du système d'affichage n'ayant pas d'incidence particulière sur l'invention.

Dans la suite de la description, il ne sera considéré que certaines des données transmises par les périphériques de désignation A, B, C, à l'attention d'une unité centrale 90 d'un système informatique 100, qui sont nécessaires à la compréhension de l'invention et de son fonctionnement.

En particulier il ne sera pas développé tous les protocoles de communication et la structure détaillée des données qui sont transmises conformément aux exigences de la norme applicable, par exemple la norme USB : « Universal Serial Bus Spécification » disponible à diverses révisions et à laquelle il est possible de se référer.

Dans l'exemple illustré sur la figure 2, deux périphériques de désignation A et B d'un premier type comportent chacun une surface active agencée sur la surface de l'écran 91 pour constituer un ou des écrans tactiles.

Chaque périphérique de désignation A, B génère des données qui sont transmises, via un bus numérique USB, en accord avec les exigences de la norme HID. Les données pourraient toutefois être transmises via un autre type de bus et suivant une autre norme de transmission sans remettre en cause les principes de l'invention.

Les périphériques de désignation sont donc des équipements standards, dans cet exemple répondant à la norme HID de communication, sans spécificité technique imposée pour la mise en œuvre de l'invention.

Dans la suite de la description les expressions « périphérique de désignation » et « périphérique HID » seront utilisées indifféremment pour désigner un périphérique de désignation comportant une surface active et configuré pour transmettre notamment la position absolue dans un repère de la surface active d'un point désigné par un doigt d'un opérateur ou par un outil adapté, par exemple un stylet.

Il doit être noté que la référence à la norme HID est ici un cas particulier de norme, pris comme exemple du fait de son utilisation fréquente actuellement dans le domaine des périphériques de désignation, mais que ce choix n'est pas limitatif de l'invention qui peut sans difficulté s'adapter à une autre norme de communication.

Le système informatique 100 met également en œuvre un recomposeur 10.

Le recomposeur 10 reçoit, sur des entrées 11A, 11B dudit recomposeur, des données suivant un format normalisé, dans l'exemple au format HID, émises par les différents périphériques HID, ici de chacun des périphériques de désignation A, B.

Le recomposeur 10 traite les données au format normalisé, reçues sur les différentes entrées 11A, 11B, pour reconstruire des données composites émises sur une sortie 17 unique dudit recomposeur suivant le format normalisé.

Il doit être compris ici que les données composites émises en sortie répondent aux exigences d'une norme et correspondent donc, pour l'unité centrale 90, aux données émises par un unique périphérique, ici suivant la norme HID.

Cette construction spécifique se distingue de celle des concentrateurs USB ou des commutateurs bien connus dans le domaine des réseaux de communications entre ordinateurs et qui assurent la transmission successive des données entrant suivant un mode série ou sans transformation sur le fond de ces données.

Dans le recomposeur 10 de l'invention, des données reçues en entrée, provenant d'au moins deux périphériques HID, sont reçues sur des entrées différentes, et les données émises sur la sortie unique 17, au format HID, combinent des informations contenues dans les données reçues à un instant donné de sorte que l'ensemble comportant le recomposeur 10 et les périphériques HID qui lui sont connectés soit vu par l'unité centrale 90 comme s'il s'agissait d'un seul périphérique répondant à la norme de communication HID, avec lequel il communique donc sans installation de logiciels ou de pilotes spécifiques sur ladite unité centrale.

Il est évident pour l'homme du métier que le recomposeur 10 doit être conçu pour prendre en compte les problèmes de synchronisation et de traitement des signaux émis ou reçus par les différents périphériques, et pour prendre en charge les différentes contraintes de la norme de communication utilisée, tant en réception qu'en émission. Le recomposeur comportera donc en particulier des mémoires tampon pour les données numériques reçues en entrée ou devant être émises et des microcontrôleurs autant que de besoins.

Les données émises par le recomposeur 10 sont donc construites à partir des données reçues par ledit recomposeur, sur des entrées différentes, disponibles à un instant donné.

Le recomposeur est avantageusement conçu autour d'un microcontrôleur, comportant des éléments conventionnels tels que processeurs, mémoires, unités périphériques, interface d'entrées-sorties, programmé dans sa forme de réalisation principale pour exécuter les transformations appliquées aux données reçues sur les entrées et pour construire les données de sortie dont les caractéristiques sont décrites ci-après.

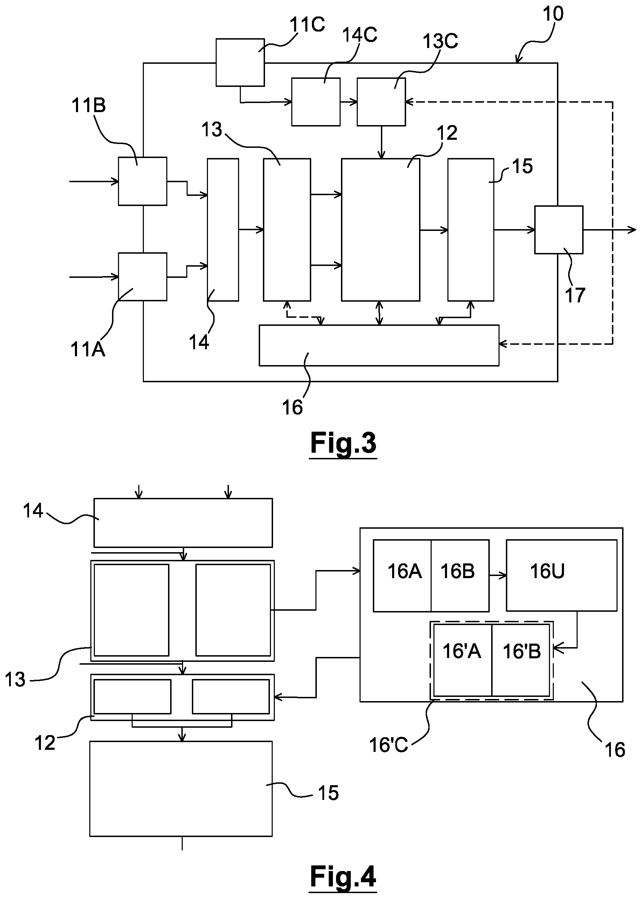

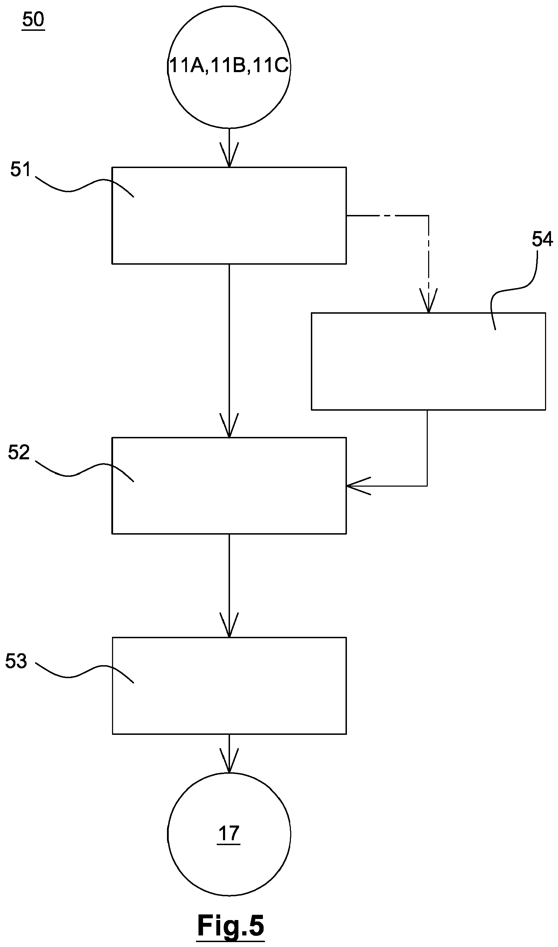

La figure 3 illustre un exemple d'architecture interne d'un recomposeur 10 conforme à l'invention et dont le fonctionnement, représenté schématiquement sur la figure 5, sera décrit dans le cas de l'utilisation de la norme HID pour les périphériques de désignation à surfaces actives.

Sur la figure 3 on trouve de gauche à droite :

- les entrées 11A, 11B, par exemple associées à des connecteurs rapides au standard USB, sur lesquelles sont raccordés les bus de transmission des données générées par chacun des périphériques HID ;
- un concentrateur USB 14 conventionnel mis en œuvre pour transmettre les données reçues vers un analyseur 13 ;
- l'analyseur 13 ;
- un contrôleur 12 ;
- un conditionneur 15 ;
- une sortie 17 sur laquelle est raccordé un bus de transmission des données, dans cet exemple de réalisation un bus série au standard USB.

Le concentrateur de la figure 3 comporte également un configurateur 16 en liaisons avec l'analyseur, le contrôleur et le conditionneur.

Il est également visible sur la figure 3 un récepteur radio 11c transmettant des signaux reçus à un contrôleur annexe 14' puis à un analyseur annexe 13' connecté au contrôleur 12 et au configurateur 16.

Les fonctions et les avantages de ce récepteur radio, du contrôleur annexe et de l'analyseur annexe seront présentés ultérieurement.

Considérant le cas de deux périphériques HID, A et B, raccordés sur les entrées 11A et 11B réciproquement, chacun d'eux transmet un ensemble de données relatif à ses caractéristiques et à son état actuel.

Lesdites données sont transmises, via le concentrateur USB 14, à l'analyseur 13 qui interprète les données reçues suivant la norme HID pour en extraire les informations nécessaires à la reconstruction des données à émettre par le recomposeur.

Ces données sont de deux natures :

- des descripteurs du périphérique HID ;
- des données variables du périphérique HID.

Les descripteurs sont des données « fixes », le cas échéant paramétrables, caractérisant le périphérique HID indépendamment des désignations qui sont réalisées, et pouvant être différentes d'un périphérique HID à un autre. Elles permettent en général à une unité centrale 90 de connaître les caractéristiques du périphérique HID duquel elle reçoit des données variables de sorte qu'une application implémentée sur ladite unité centrale est en mesure d'interpréter correctement des données variables reçues de ce même périphérique HID. Dans le cas de l'invention, elles sont traitées par l'analyseur.

Les données variables sont liées à l'utilisation du périphérique HID. Sur une surface tactile, ces données indiquent qu'un doigt est en contact avec la surface active et donnent la position du doigt sous la forme de coordonnées cohérentes avec les descripteurs. Ces données seront interprétées par une application implémentée sur l'unité centrale en considérant qu'elles sont conformes à la norme HID.

Comme déjà signalé, les périphériques conformes à la norme USB/HID peuvent être pris en charge par toutes les applications et sur tout système d'exploitation, ayant intégré la norme en question dans ses protocoles de communication, sans qu'il soit nécessaire de mettre en œuvre des pilotes spécifiques, comme dans le cas des systèmes utilisant des protocoles de communication dits « propriétaires ».

Suivant le procédé 50 de transformation des données d'entrées schématisé sur la figure 5, dans une première étape d'analyse 51, l'analyseur 13 va ainsi reconstituer une table de données, issue des descripteurs et des données variables, de chacun des périphériques HID concernés par un traitement par le contrôleur.

Dans le cas d'un périphérique HID à curseur, tel qu'une souris, les données relatives au déplacement du curseur sont interprétées, par le contrôleur pour calculer une position d'un pointeur piloté par ledit curseur sur une surface de désignation attribuée audit périphérique.

Dans une seconde étape de description 54, le configurateur 16 traite les descripteurs de chacun des périphériques HID A, B, de sorte à élaborer un assemblage virtuel des surfaces de désignation 16A, 16B des périphériques HID A, B, pour définir une surface active unique 16U, virtuelle, représentative d'un agencement physique des surfaces de désignation desdits périphériques.

Cet agencement physique des surfaces de désignation est connu du recomposeur dans un cas simple, par exemple lorsque le configurateur est destiné à un assemblage prédéfini de surfaces de désignation, on peut citer l'exemple de surfaces actives d'écrans tactiles prépositionnés.

Dans une autre forme, l'agencement physique est communiqué sous la forme de paramètres transmis au recomposeur lors d'une étape d'initialisation ou de paramétrage, par exemple par un utilisateur du système informatique 100 via l'unité centrale 90.

La figure 4 illustre en particulier un exemple simple d'assemblage définissant une telle surface active unique 16U.

Les périphériques HID considérés comportent dans cet exemple des surfaces tactiles sensibles au toucher, capable d'identifier la position d'un doigt touchant la surface tactile.

Dans cet exemple, deux écrans d'affichage recouvert chacun d'une surface tactile sont juxtaposés, sensiblement bord à bord, pour former un écran 91 composite présentant l'apparence d'un unique écran. Dans cette configuration, la surface active simulée 16U correspond physiquement à l'assemblage des surfaces tactiles recouvrant les écrans.

Toutefois, les périphériques de désignation comportant ces écrans tactiles étant a priori des équipements « sur étagère », il n'est pas imposé que les deux surfaces tactiles aient les mêmes caractéristiques, et elles peuvent en particulier présenter des dimensions physiques différentes, des dimensions logiques (résolutions) différentes, des technologies de détection différentes. Les descripteurs de chacun des périphériques HID correspondant sont donc non seulement distincts mais peuvent être différents.

La surface active unique 16U correspond également à des descripteurs, arbitrairement choisis ou conformés, dans lesquels doivent être convertis les descripteurs des périphériques HID connectés au recomposeur 10. La conversion réalisée dans le configurateur 16 détermine principalement des transformations par lesquelles un point d'une surface de désignation d'un périphérique de désignation exprimé par des coordonnées dans un système de référence de ladite surface de désignation, correspond sur la surface active unique 16U en un point de ladite surface active unique, exprimé par des coordonnées dans un système de coordonnées de ladite surface active unique.

A titre d'exemple, le configurateur de la figure 4 illustre le cas de deux surfaces de désignation rectangulaires accolées par un bord de chacune de même longueur, une hauteur sur l'illustration, mais des points desdites surfaces de désignation étant déterminés dans des systèmes de coordonnées avec des échelles différentes pour les deux surfaces de désignation.

Dans le système de coordonnées de la première surface de désignation 16A, ici associée à la surface d'affichage du premier périphérique HID A, une échelle de ladite surface tactile est déterminée (par construction) par les coordonnées d'un point supérieur à droite : [X=2353 ; Y=1322] par rapport à une origine d'un point inférieur à gauche : [X=0 ; Y=0] de ladite première surface de désignation, X étant une abscisse suivant une largeur et Y une ordonnée suivant une hauteur de ladite surface de désignation.

Dans le système de coordonnées de la seconde surface de désignation 16B associée à la surface d'affichage du second périphérique HID B, une échelle de ladite surface de désignation est déterminée (par construction) par les coordonnées d'un point supérieur à droite : [X=19353 ; Y=10886] par rapport à une origine d'un point inférieur à gauche : [X=0 ; Y=0] de ladite seconde surface de désignation.

La surface active unique 16U, représentative de l'assemblage des deux surfaces de désignation, est associée à un système de coordonnées ayant pour coordonnées d'un point supérieur à droite : [X=32768 ; Y=32768], valeurs choisies arbitrairement, par rapport à une origine d'un point inférieur à gauche : [X=0 ; Y=0] de ladite surface active unique.

Cette surface active unique 16U comporte alors deux zones dont une première zone 16A' est isomorphe de la première surface de désignation 16A et dont une seconde zone 16B' est isomorphe de la seconde surface de désignation 16B. Les positions relatives entre lesdites première et seconde zones sont également celles entre la première surface de désignation 16A réelle et la seconde surface de désignation 16B.

Ainsi, dans le système de coordonnées de la surface tactile unique 16U la première zone 16A' associée à la surface d'affichage du premier périphérique HID A est ici déterminée par les coordonnées d'un point supérieur à droite : [X=16384 ; Y=32768] et une origine en un point inférieur à gauche : [X=0 ; Y=0].

La seconde zone 16B' associée à la surface d'affichage du second périphérique HID B est pour sa part déterminée par les coordonnées d'un point supérieur à droite : [X=32768 ; Y=32768] et une origine de ladite seconde surface de désignation en un point inférieur à gauche : [X=16385 ; Y=0]. Le décalage en X du point origine de ladite seconde zone correspond à l'agencement juxtaposé des deux surfaces de désignation 16A, 16B.

Dans cet exemple simple, les deux surfaces tactiles 16A et 16B ont les mêmes dimensions physiques ce qui conduit à deux zones de mêmes largeurs suivant X et mêmes hauteurs suivant Y.

Cette condition n'est cependant pas exigée.

En effet, les surfaces de désignation peuvent avoir entre elles des dimensions différentes, des formes différentes, des orientations différentes. Elles peuvent également être totalement ou partiellement superposées.

La zone de la surface active unique 16U associée à une surface de désignation pourra être une transformation linéaire de la surface tactile physique ou être transformée par des lois non linéaires pour produire des effets particuliers, par exemple des modifications d'échelle en fonction de la position d'un point désigné sur la surface de désignation ou des effets de courbures.

Des zones correspondant à différentes surfaces de désignation ne sont pas nécessairement agencées de manière similaire à l'agencement physique desdites surfaces de désignation, et dans la surface active unique 16U des zones de différentes surfaces de désignation peuvent être rapprochées ou éloignées ou plus ou moins superposées. Une zone peut également déclarer des emplacements d'une surface de désignation comme non actifs. Cette dernière configuration permet par exemple d'assurer la continuité d'une action tel qu'un glissement d'un doigt d'un opérateur, lorsqu'il existe une zone non active entre deux surfaces de désignation juxtaposées concernées par le glissement.

Par exemple, dans le cas simple décrit de deux surfaces de désignation, les deux surfaces de désignation 16A et 16B peuvent avoir une même hauteur physique comme représenté mais des largeurs différentes, cas non représenté, et dans ce cas les dimensions suivant Y des deux zones 16A' et 16B' seront identiques, et les dimensions suivant X seront différentes et dans le rapport des largeurs physiques desdites surfaces de désignation. Elles peuvent également avoir des orientations différentes : de 90 ou 45 degrés par exemple pour former des mosaïques tactiles. Elles peuvent également ne pas être jointives pour correspondre à un agencement physique des surfaces de désignation.

Les deux surfaces de désignation 16A et 16B peuvent également avoir des hauteurs physiques différentes, cas non représenté. Dans ce cas la surface active unique 16U rectangulaire ne sera pas totalement active.

Dans une troisième étape de conversion 52, les données caractérisant les zones 16A', 16B', associées aux périphériques HID A, B, établies par le configurateur 16 lors de l'étape de description 54, sont transmises au contrôleur 12.

Dans cette étape de conversion, pour chaque périphérique HID connecté au recomposeur 10, le contrôleur 12 transforme les données variables relatives au fonctionnement du périphérique HID de sorte que lesdites données variables transmises par ledit périphérique HID en correspondance avec les descripteurs dudit périphérique HID soient exprimées après transformation en correspondance avec des descripteurs de la surface active unique 16U.

Typiquement, la position désignée, par exemple la position détectée d'un doigt, sur une surface de désignation d'un périphérique HID, qui est transmise par ledit périphérique HID dans les données comme un couple de valeurs (Xf, Yf) correspondant à la position désignée dans le système de coordonnées de la surface de désignation considérée, est convertie dans le système de coordonnées de la surface active unique 16U par un facteur d'échelle sur chacun des axes et par un décalage de l'origine des coordonnées, facteur d'échelle et décalage d'origine fonction de la zone de la surface active unique 16U correspondant à la surface de désignation considérée.

Ainsi dans l'exemple illustré exposé précédemment, un point de coordonnées (Xfa, Yfa) du premier périphérique HID A sera transformé par homothétie simple, sans décalage d'origine du fait que les origines sont confondues, en un point de coordonnées (Xga, Yga) dans le système de coordonnées de la surface active unique 16U :

$$Xga = Xfa \times 16384 / 2353$$

$$Yga = Yfa \times 32768/1322$$

et un point de coordonnées (Xfb, Yfb) du second périphérique HID B sera transformé par homothétie et décalage d'origine en un point de coordonnées (Xgb, Ygb) dans le système de coordonnées de la surface active unique 16U :

$$Xgb = ( Xfb \times 16384 / 19353 ) + 16385$$

$$Ygb = Yfb \times 32768/10886$$

Dans une quatrième étape de formatage 53, le conditionneur HID 15 reçoit :

- du configurateur 16, les données pour reconstituer les descripteurs de la surface active unique 16U conformément aux spécifications de la norme HID, et ;
- les données variables, résultant de la transformation lors de l'étape de conversion des données variables transmises par chacun des périphériques HID connectés au recomposeur 10, porteuses desdites données variables des périphériques HID et se présentant comme des données variables liées au fonctionnement de la surface active unique 16U, puis ;
- reconstruit la table des données, incorporant les descripteurs et les données variables de la surface active unique 16U pour émettre lesdites données suivant les conditions de la norme relative aux périphériques HID, c'est-à-dire les données correspondant à celles qui seraient émises par un périphérique de désignation unique de surface de désignation la surface active unique 16U.

Lorsque le recomposeur 10 est en fonction, les différentes étapes du procédé 50 de transformation des données d'entrée sont réalisées de manière récurrente lorsque de nouvelles données variables doivent être transformées.

Toutefois, la deuxième étape d'analyse ne nécessite d'être mise en œuvre que lorsque le recomposeur est mis en service dans un système informatique et lorsque la configuration des périphériques de désignation connectés audit recomposeur est modifiée, par exemple par l'ajout d'un périphérique de désignation.

Il résulte ainsi de l'invention qu'une pluralité de périphériques HID A, B, connectés au recomposeur 10 est « vue » par l'unité centrale 90 comme un seul périphérique HID comportant les capacités de désignation combinées des périphériques HID de ladite pluralité de périphériques HID qui sont en mesure d'être mis en œuvre simultanément par simple raccordement (« plug and play » suivant l'expression anglo-saxonne).

Le recomposeur 10, associé à l'ensemble des périphériques de désignation qui lui sont connectés, se comporte donc vis-à-vis de l'unité centrale 90 comme un périphérique de désignation unique pour lequel ne se posent plus les problèmes de fonctionnement connus lorsque plusieurs périphériques de désignation sont raccordés individuellement directement à l'unité centrale.

Comme déjà signalé en introduction de l'exposé de cet exemple de réalisation, il n'est pas présenté dans la description de détails liés aux protocoles exposés dans les normes USB et HID qui sont associés au fonctionnement des périphériques HID, ces détails connus de l'Homme du Métier n'apportant pas d'informations utiles à la compréhension de l'invention.

En outre, l'invention peut être réalisée pour des dispositifs de désignation utilisant d'autres normes de transmission des données que la norme HID, bien que cette norme soit aujourd'hui très utilisée.

Dans une forme de réalisation, le recomposeur 10 intègre au moins une entrée pour un périphérique de désignation d'un deuxième type, comportant une surface active et conçu pour communiquer avec une unité centrale par des protocoles spécifiques ne répondant pas à une norme publique, désigné de manière générique par l'expression « système propriétaire », ou à une norme différente de celle utilisée pour les périphériques de désignation du premier type connectés audit recomposeur.

Dans cette forme de réalisation les données transmises par ce périphérique de désignation d'un deuxième type sont transformées par le recomposeur en fonction de leurs structures pour reconstruire une table de données de forme équivalente à celles des autres périphériques de désignation raccordés audit recomposeur.

Les données reçues de ce périphérique de désignation d'un deuxième type sont alors traitées comme celles des périphériques de désignation du premier type et prises en compte dans l'étape de formatage 53 pour être incorporée dans la table des données de la surface active unique 16U.

Il sera noté qu'un périphérique de désignation du deuxième type, au moins certains d'entre eux, ne comporte pas nécessairement les descripteurs nécessaires pour attribuer à la surface active une zone particulière de la surface active unique 16U. Dans ce cas il sera attribué audit périphérique de désignation une zone arbitraire, par exemple toute la surface active unique 16U, ou une zone 16A, 16B d'un autre périphérique de désignation A, B, ou encore une zone sélectionnée par un opérateur depuis un poste informatique connecté.

Un exemple de cette forme de réalisation est illustré sur la figure 2 et sur la figure 3.

Dans cet exemple, le périphérique de désignation C du deuxième type est un stylet C1 associé à une surface active C2. Dans le cas illustré, le périphérique C transmet les données par une liaison radio (Wifi, Bluetooth ®, ...), essentiellement pour des raisons pratiques.

Un tel périphérique de désignation de deuxième type, n'utilise pas la norme de communication normalisée HID (dans le cas contraire il serait considéré comme un périphérique de désignation du premier type), et nécessite généralement des logiciels pilotes qui doivent être installés sur l'unité centrale pour sa mise en œuvre.

De tels logiciels pilotes sont spécifiques du système d'exploitation installé sur l'unité centrale 90 et parfois ne sont pas disponibles pour certains systèmes d'exploitation, ce qui limite l'usage de ces périphériques aux systèmes d'exploitation pour lesquels les logiciels pilotes sont disponibles.

Dans la forme de réalisation illustrée du recomposeur 10 de l'invention, ledit recomposeur comporte, comme illustré sur la figure 3, outre les particularités décrites précédemment pour prendre en charge deux périphériques HID :

- un récepteur 11C ;
- un contrôleur annexe 14C ;
- un analyseur annexe 13C.

Le récepteur 11C, ici un récepteur radio, reçoit les données émises par le stylet.

Ces données comportent au moins une identification du périphérique afin que le recomposeur puisse lui attribuer les interactions correspondantes sur la surface C2.

Ces données de fonctionnement sont, dans des conditions d'une utilisation ordinaire, normalement extraites et interprétées par le logiciel pilote spécifiquement adapté au périphérique considéré.

Dans le cas du recomposeur 10, les données reçues par le contrôleur radio 14C sont traitées par l'analyseur annexe 13C pour obtenir les données variables liées à l'utilisation de la tablette graphique.

Pour cela l'analyseur annexe 13C comporte par exemple un microprogramme qui peut être installé lors de la fabrication du recomposeur ou téléchargé dans une mémoire flash, par exemple depuis l'unité centrale 90.

Avantageusement, il sera incorporé dans l'analyseur annexe 13C les descripteurs du stylet.

Les données variables et les descripteurs déterminés pour le périphérique de désignation du deuxième type C sont ensuite transmis au contrôleur 12.

Le contrôleur 12 reconstruit alors pour ledit périphérique de désignation du deuxième type, tel que le stylet considéré, une table de données cohérentes avec les tables de données produites par les périphériques HID, et ledit périphérique de désignation du deuxième type est ensuite traité comme un périphérique de désignation du premier type, qui est associée à une surface de désignation dans laquelle ledit périphérique de désignation est actif, par exemple, dans le cas d'un stylet C1 la surface active C2 associée audit stylet.

La surface active du périphérique de désignation du deuxième type est alors associée à une zone 16'C de la surface active unique 16U.

Ladite zone 16C' est par exemple égale à la surface active unique 16U de sorte que le stylet C1 permet de désigner n'importe quel point de la surface d'affichage 91 correspondant par exemple à la surface active unique 16U.

Dans la pratique, tout ou partie de la zone 16C' sur laquelle agit le stylet C1 peut être juxtaposée aux autres zones 16A', 16B' des périphériques de désignation 16A, 16B, et ou peut en couvrir tout ou partie.

Après avoir été reconstruites par le contrôleur 12, les données liées au périphérique de désignation du deuxième type C ont la même structure que les données des autres périphériques de désignation A, B, de sorte qu'elles sont reprises et traitées comme ces dernières par le contrôleur 12 pour convertir les données en fonction de données reçues du configurateur 16.

Comme dans la forme de réalisation mettant en œuvre deux périphériques HID, les données sont ensuite transmises au conditionneur 15 qui reconstruit la table des données, incorporant les données variables transformées issues de tous les périphériques de désignation A, B et C, du premier type ou du deuxième type, connectés au recomposeur 10.

Ces données sont alors transmises via le bus de communication raccordé à la sortie 17 dans les formes et conditions de la norme relative aux périphériques de désignation, la norme HID dans l'exemple, pour être vues par l'unité centrale 90 comme des données représentatives du fonctionnement de la surface active unique 16U.

Il peut ici être remarqué que l'usage simultané d'une tablette graphique et d'un écran tactile n'est généralement pas envisagé.

Cette situation est cependant très liée à la limitation des systèmes actuels qui ne permettent pas une telle utilisation simultanée de manière efficace et plutôt considérée comme perturbante.

A contrario, le recomposeur 10 de l'invention permet à un opérateur de travailler avec une tablette graphique sur un écran tactile, par exemple un écran tactile de grandes dimensions en position verticale, pouvant être constitué de plusieurs dalles d'écran d'affichage et de plusieurs surfaces tactiles, et simultanément à un ou plusieurs autres opérateurs de travailler par des interactions directes sur l'écran tactile, dans le cadre d'un travail collaboratif.

En outre le recomposeur 10 a également pour effet de rendre un périphérique de désignation de deuxième type, communiquant nominalement suivant un protocole différent, ouvert ou propriétaire, compatible avec une norme telle que la norme HID. De fait, grâce au recomposeur de l'invention, le périphérique de désignation de deuxième type peut être utilisé sur tout système informatique compatible avec la norme de sortie des données gérées par ledit recomposeur, et sans qu'il soit nécessaire d'utiliser un pilote spécifique sur le système informatique, à supposer que ce pilote soit disponible pour ledit système informatique.

On notera également ici qu'un périphérique HID à curseurs, tel qu'une souris, est par l'intermédiaire du recomposeur 10 utilisable avec d'autres périphériques de désignation de manière simultanée, ces autres périphériques de désignation pouvant être de tous types, surfaces tactiles, stylets associés à des surfaces actives, et également autres périphériques à curseurs.

Dans certaines configurations, en particulier pour augmenter le nombre de périphériques HID devant être connectés sur une entrée unique d'une unité centrale au-delà d'un nombre d'entrée du recomposeur 10, ledit recomposeur 10 peut recevoir un ou plusieurs autres recomposeur, chacun connecté sur une entrée du premier recomposeur 10, un tel montage en cascade permettant, au moins en théorie, de multiplier indéfiniment le nombre de périphérique de désignation simultanément connectés à l'unité centrale.

Bien évidemment, le nombre d'entrées pour raccorder au recomposeur des périphériques de désignation n'est pas, au moins en théorie, limité pour autant qu'il puisse être mis les données variables correspondantes sur une sortie unique en restant compatible avec la norme considérée.

Avantageusement le recomposeur comporte au moins deux entrées afin de rendre utilisables simultanément au moins deux périphériques de désignation.

La norme utilisée en sortie pour la transmission des données vers l'unité centrale du système informatique n'est pas nécessairement la même que celle(s) utilisée(s) pour recevoir les données en entrée du recomposeur.

A titre d'exemple de mise en œuvre il est considéré la situation déjà décrite de deux périphériques de désignation comportant chacun une surface tactile.

Les deux surfaces tactiles sont agencées pour former un écran tactile, par exemple chaque surface tactile couvrant une moitié d'un écran de dimensions supérieures à celles d'une surface tactile, ou bien chaque surface tactile couvrant un écran et les deux écrans étant agencés pour former une surface d'affichage d'ensemble, les deux surfaces tactiles n'étant pas nécessairement de la même technologie, par exemple une surface tactile en technologie capacitive et une autre en technologie optique.

Grâce au recomposeur il est possible de réaliser des opérations sur le système d'affichage, conventionnelles aujourd'hui sur un écran tactile simple mais non réalisable de manière simple et intuitive sur l'agencement composite envisagé des surfaces tactiles.

Exemple 1 : le glissé simple : un opérateur pose un doigt sur une des surfaces tactiles et le déplace, par exemple pour tracer une ligne ou déplacer un objet « saisi ». Si la trajectoire de son doigt passe d'une surface tactile à une autre, le mouvement sera perçu par l'unité centrale comme le déplacement continu du doigt sur une seule surface tactile sans discontinuité. En particulier si pour des raisons techniques une séparation existe entre les deux surfaces tactiles, la définition d'une zone « morte » correspondante dans la surface active unique 16U assurera l'alignement des trajectoires suivies par le doigt sur les deux surfaces tactiles, l'absence momentanée de signal pouvant être dans cet exemple considérée comme un lever momentané du doigt.

Exemple 2 : contacts multiples simultanés : un opérateur pose deux doigts dont un doigt sur une des surfaces tactiles et l'autre doigt sur l'autre surface tactile. Ce double contact ne génère pas de conflit car il est reçu par l'unité centrale comme un double contact sur une même surface tactile. Il sera donc possible de produire des effets d'agrandissement ou de rétrécissement d'une image, de rotation d'une image, par une action coordonnée de glissement des doigts sur les surfaces tactiles considérées par l'unité centrale comme une surface tactile unique.

Exemple 3 : travail collaboratif : un opérateur réalise des opérations au moyen d'un stylet et d'une tablette active, ces opérations se matérialisant sur un écran tactile (simple ou composite). Un autre opérateur interagit sans conflit simultanément par des contacts de doigts sur les formes ou autres éléments générés par le moyen du stylet et de la tablette active.

L'invention permet ainsi de palier aux défauts des solutions existantes en permettant d'assembler plusieurs périphériques de désignation existants, le cas échéant de technologies différentes, en assurant la possibilité de les utiliser simultanément de manière transparente pour le système informatique dont l'unité centrale n'identifie qu'un seul périphérique de désignation qui transmet cependant toutes les informations individualisées des actions réalisées sur chacun des périphériques de désignation.

Il sera compris que l'architecture du recomposeur est décrite à titre d'exemple dans un cas particulier et que l'homme du métier pourra choisir de réaliser les différentes fonctions devant être réalisées par le recomposeur de l'invention en mettant en œuvre, si besoin, un ou plusieurs analyseurs, et ou un ou plusieurs contrôleurs, et ou un ou plusieurs configurateurs, et ou un ou plusieurs conditionneurs. Il pourra également choisir de regrouper certains éléments ou au contraire de répartir les fonctions à réaliser de manières différentes sans se départir de l'invention.

Dans une forme de réalisation, le recomposeur comporte plusieurs sorties de sorte qu'il est en mesure de transmettre des données recomposées à plusieurs ordinateurs.

L'invention décrite dans ce document est issue de travaux partiellement soutenus par la Commission Européenne dans le contexte du 7e programme-cadre sous la convention de subvention Magellan numéro 611526.

## Revendications

1. Recomposeur (10), permettant de connecter à une même unité centrale (90) d'un système informatique (100) et de rendre utilisables simultanément une pluralité de périphériques de désignation (A, B, C), et comportant :

   - des entrées (11A, 11B, 11C) pour recevoir, de chacun des périphériques de désignation, lorsque ledit périphérique de désignation est connecté audit recomposeur, des données normalement reçues par l'unité centrale (90) lorsque ledit périphérique de désignation est connecté directement à ladite unité centrale ;
   - au moins une sortie (17) pour émettre des données vers l'unité centrale (90), lorsque ledit recomposeur est connecté à ladite unité centrale ;
   - des moyens de traitement numérique (12, 13, 15, 13C, 14C, 16) configurés pour transformer les données reçues en entrées (11A, 11B, 11C) du recomposeur en données émises en sortie (17) du recomposeur ;

   lesdites données émises en sortie étant conformes en contenu et en structure à des données qui seraient émises par un périphérique de désignation comportant une surface active unique (16U) ;

   lesdites données émises en sortie (17) caractérisant individuellement, à chaque instant, sur la surface active unique (16U), des actions réalisées avec les périphériques de désignation (A, B, C), actions **caractérisées par** les données reçues en entrées (11A, 11B, 11C), ledit recomposeur étant **caractérisé en ce que** :

   les moyens de traitement numérique comportent :

   - au moins un analyseur (13, 13C) configuré pour extraire, des données reçues en entrées (11A, 11B, 11C) de chacun des périphériques de désignation connectés audit recomposeur, une table de données variables et de descripteurs dudit périphérique de désignation ; au moins un configurateur (16) configuré pour définir des dimensions et position d'une surface active (16A, 16B, 16C) associée à chacun des périphériques de désignation connectés audit recomposeur dans un système de coordonnées de la surface active unique (16U) ;
   - au moins un contrôleur (12) pour transformer des données variables des données reçues en entrées (11A, 11B, 11C) en données variables des données émises en sortie (17) ;
   - au moins un conditionneur (15) configuré pour structurer les données à émettre sur la sortie (17) en accord avec un protocole de communication compris par l'unité centrale (90) à laquelle doit être connecté le recomposeur (10) ;

   et **en ce que** :
   le configurateur (16), pour chaque surface active (16A, 16B, 16C) associée à un périphérique de désignation connecté au recomposeur, définit des dimensions et une position dans la surface active unique (16U) d'une zone (16A', 16B', 16C') correspondant à ladite surface active associée au périphérique de désignation par :

   - une mise à l'échelle d'un axe d'abscisse et d'un axe d'ordonnée de chaque surface active connus dans un système de coordonnées de ladite surface active vers un système de coordonnées de la surface active unique (16U) ;
   - une position d'un point de référence de chaque surface active dans le système de coordonnées de la surface active unique (16U).

2. Recomposeur suivant la revendication 1, dans lequel des coordonnées d'un point désigné sur une surface active (16A, 16B, 16C) dans le système de coordonnées d'un périphérique de désignation (A, B, C) transmises dans les données variables reçues sur une entrée (11A, 11B, 11C) du recomposeur, ou élaborées par le recomposeur à partir des données variables reçues, sont transformées en coordonnées dudit point désigné sur la surface active, dans le système de coordonnées de la surface active unique (16U), et incorporées dans les données variables des données émises par la sortie (17).

3. Recomposeur suivant l'une des revendications 1 ou 2, configuré pour recevoir, sur au moins une entrée (11A, 11B), des données conformes aux exigences d'une norme ouverte, par exemple la norme USB et la surcouche HID à ladite norme USB.

4. Recomposeur suivant l'une des revendications 1 à 3, configuré pour recevoir, sur au moins une entrée (11C), des données définies par un protocole fermé dit « propriétaire ».

5. Recomposeur suivant l'une des revendications 1 à 4, dans lequel les données émises en sortie (17) sont conformes aux exigences d'une norme ouverte, par exemple la norme USB et la surcouche HID à ladite norme USB.

6. Recomposeur suivant l'une des revendications 1 à 5, dans lequel au moins une entrée (11C) correspond à une liaison sans fil à laquelle peut se connecter un périphérique de désignation (C) sans fil, par exemple par liaison radio ou par liaison optique.

7. Ensemble comportant un recomposeur (10) conforme à l'une des revendications 1 à 6 et comportant au moins deux périphériques de désignation (A, B, C).

8. Ensemble suivant la revendication 7, dans lequel au moins un périphérique de désignation (A, B) comporte une surface active (16A, 16B) associée à un écran tactile.

9. Ensemble suivant la revendication 7 ou la revendication 8, dans lequel au moins un périphérique de désignation (C) est un stylet associé à une surface active.

10. Ensemble suivant l'une des revendications 7 à 9, dans lequel au moins un périphérique de désignation est un dispositif à défilement dont les signaux sont traités pour définir une position sur une surface active.

11. Système informatique comportant un ensemble conforme à l'une des revendications 7 à 10, dans lequel la sortie (17) du recomposeur (10) est connectée à une unité centrale (90) dudit système informatique.

12. Procédé permettant de raccorder plusieurs périphériques de désignation (A, B, C) à une même unité centrale (90) dans un système informatique (100), et de rendre utilisables simultanément lesdits périphériques de désignation, comportant les étapes de connecter lesdits périphériques de désignation sur des entrées d'un recomposeur (10) conforme à l'une des revendications 1 à 6 et à connecter une sortie dudit recomposeur à l'unité centrale (90) de sorte que lesdits périphériques de désignation connectés audit recomposeur sont vus par ladite unité centrale comme un seul périphérique de désignation à surface active.

13. Procédé suivant la revendication 12, comportant une étape de paramétrage du recomposeur (10), ladite étape de paramétrage consistant à définir un agencement de surfaces actives (16A, 16B, 16C), associées à chacun des périphériques de désignation (A, B, C) connectés, dans la surface active unique (16U).

**Patentansprüche**

1. Kombinierer (10), der es ermöglicht, eine Vielzahl von Bezeichnungsperipheriegeräten (A, B, C) mit einer einzigen Zentraleinheit (90) eines Computersystems (100) zu verbinden und gleichzeitig nutzbar zu machen, und der Folgendes umfasst:

    - Eingänge (11A, 11B, 11C) zum Empfangen von Daten, die normalerweise von der Zentraleinheit (90) empfangen werden, wenn das Bezeichnungsperipheriegerät direkt mit der Zentraleinheit verbunden ist, von jedem der Bezeichnungsperipheriegeräte, wenn das Bezeichnungsperipheriegerät mit dem Kombinierer verbunden ist ;
- mindestens einen Ausgang (17) zum Senden von Daten an die Zentraleinheit (90), wenn der Kombinierer mit der Zentraleinheit verbunden ist;
- digitale Verarbeitungsmittel (12, 13, 15, 13C, 14C, 16), die so konfiguriert sind, dass sie die an den Eingängen (11A, 11B, 11C) des Kombinierers empfangenen Daten in an den Ausgängen (17) des Kombinierers ausgegebene Daten umwandeln;
wobei die ausgegebenen Daten inhaltlich und strukturell mit Daten übereinstimmen, die von einem Bezeichnungsperipheriegerät mit einer einzelnen aktiven Fläche (16U) ausgegeben würden;
wobei die ausgegebenen Daten (17) zu jedem Zeitpunkt auf der einzigen aktiven Fläche (16U) individuell Aktionen charakterisieren, die mit den Bezeichnungsperipheriegeräten (A, B, C) durchgeführt werden, wobei die Aktionen durch die an den Eingängen (11A, 11B, 11C) empfangenen Daten charakterisiert werden, wobei der Kombinierer **dadurch gekennzeichnet ist, dass**:
die Mittel zur digitalen Verarbeitung Folgendes umfassen:

    - mindestens einen Analysator (13, 13C), der so konfiguriert ist, dass er aus den Daten, die als Eingaben (11A, 11B, 11C) von jedem der mit dem Kombinierer verbundenen Bezeichnungsperipheriegeräte empfangen werden, eine Tabelle mit variablen Daten und Deskriptoren des Bezeichnungsperipheriegeräts extrahiert; mindestens einen Konfigurator (16), der so konfiguriert ist, dass er die Abmessungen und die Position einer aktiven Fläche (16A, 16B, 16C), die jedem der mit dem Kombinierer verbundenen Bezeichnungsperipheriegeräte zugeordnet ist, in einem Koordinatensystem der einzelnen aktiven Fläche (16U) definiert;
    - mindestens einen Kontroller (12), um variable Daten der an Eingängen (11A, 11B, 11C) empfangenen Daten in variable Daten der an Ausgängen (17) ausgegebenen Daten umzuwandeln;
    - mindestens einen Aufbereiter (15), der so konfiguriert ist, dass er die an den Ausgang (17) auszugebenden Daten in Übereinstimmung mit einem Kommunikationsprotokoll strukturiert, das von der Zentraleinheit (90) verstanden wird, an die der Kombinierer (10) angeschlossen werden soll;

und dadurch, dass:
der Konfigurator (16) für jede aktive Fläche (16A, 16B, 16C), die einem mit dem Kombinierer verbundenen Bezeichnungsperipheriegerät zugeordnet ist, Abmessungen und eine Position in der einzelnen aktiven Fläche (16U) eines Bereichs (16A', 16B', 16C') definiert, der der aktiven Fläche entspricht, die dem Bezeichnungsperipheriegerät zugeordnet ist, durch:

- eine Skalierung einer Abszissenachse und einer Ordinatenachse jeder aktiven Fläche, die in einem Koordinatensystem der aktiven Fläche bekannt sind, auf ein Koordinatensystem der einzelnen aktiven Fläche (16U);
- eine Position eines Referenzpunkts jeder aktiven Fläche in dem Koordinatensystem der einzelnen aktiven Fläche (16U).

2. Kombinierer nach Anspruch 1, bei dem Koordinaten eines bezeichneten Punkts auf einer aktiven Fläche (16A, 16B, 16C) im Koordinatensystem eines Bezeichnungsperipheriegeräts (A, B, C), die in den an einem Eingang (11A, 11B, 11C) des Kombinierers empfangenen variablen Daten übertragen wurden, oder vom Kombinierer aus den empfangenen variablen Daten erstellt werden, in die Koordinaten des bezeichneten Punkts auf der aktiven Fläche im Koordinatensystem der einzelnen aktiven Fläche (16U) umgewandelt und in die variablen Daten der vom Ausgang (17) ausgegebenen Daten aufgenommen werden.

3. Kombinierer nach einem der Ansprüche 1 oder 2, der so konfiguriert ist, dass er an mindestens einem Eingang (11A, 11B) Daten empfängt, die die Anforderungen eines offenen Standards bestätigen, zum Beispiel den USB-Standard und die HID-Überlagerung des USB-Standards.

4. Kombinierer nach einem der Ansprüche 1 bis 3, der so konfiguriert ist, dass er an mindestens einem Eingang (11C) Daten empfängt, die durch ein geschlossenes, sogenanntes "proprietäres" Protokoll definiert sind.

5. Kombinierer nach einem der Ansprüche 1 bis 4, wobei die ausgegebenen Daten (17) den Anforderungen eines offenen Standards entsprechen, zum Beispiel dem USB-Standard und der HID-Überlagerung zu diesem USB-Standard.

6. Kombinierer nach einem der Ansprüche 1 bis 5, wobei mindestens ein Eingang (11C) einer drahtlosen Verbindung entspricht, mit der sich ein drahtloses Bezeichnungsperipheriegerät (C) verbinden kann, zum Beispiel über eine Funkverbindung oder eine optische Verbindung.

7. Anordnung mit einem Rekombinierer (10) gemäß einem der Ansprüche 1 bis 6 und mit mindestens zwei Bezeichnungsperipheriegeräten (A, B, C).

8. Anordnung nach Anspruch 7, wobei mindestens ein Bezeichnungsperipheriegerät (A, B) eine aktive Fläche (16A, 16B) aufweist, die mit einem Touchscreen verbunden ist.

9. Anordnung nach Anspruch 7 oder Anspruch 8, wobei mindestens ein Bezeichnungsperipheriegerät (C) ein Stift ist, der mit einer aktiven Fläche verbunden ist.

10. Anordnung nach einem der Ansprüche 7 bis 9, wobei mindestens ein Bezeichnungsperipheriegerät ein Scrollgerät ist, dessen Signale verarbeitet werden, um eine Position auf einer aktiven Fläche zu definieren.

11. Computersystem mit einer Anordnung nach einem der Ansprüche 7 bis 10, wobei der Ausgang (17) des Rekombinierers (10) mit einer Zentraleinheit (90) des Computersystems verbunden ist.

12. Verfahren zum Verbinden mehrerer Bezeichnungsperipheriegeräte (A, B, C) mit derselben Zentraleinheit (90) in einem Computersystem (100) und zur gleichzeitigen Benutzbarkeit der Bezeichnungsperipheriegeräte, das die folgenden Schritte umfasst: Verbinden der Bezeichnungsperipheriegeräte mit Eingängen eines Rekombinierers (10) nach einem der Ansprüche 1 bis 6 und Verbinden eines Ausgangs des Rekombinierers mit der Zentraleinheit (90), so dass die mit dem Rekombinierer verbundenen Bezeichnungsperipheriegeräte von der Zentraleinheit als ein einziges Bezeichnungsperipheriegerät mit aktiver Fläche betrachtet werden.

13. Verfahren nach Anspruch 12, umfassend einen Schritt des Einrichtens des Rekombinierers (10), wobei der Schritt des Einrichtens darin besteht, eine Anordnung von aktiven Flächen (16A, 16B, 16C), die mit jedem der angeschlossenen Bezeichnungsperipheriegeräte (A, B, C) verbunden sind, in der einzelnen aktiven Fläche (16U) zu definieren.

## Claims

1. - A recomposer (10), allowing connecting a plurality of designation peripherals (A, B, C) to the same central unit (90) of a computer system (100) and making them simultaneously usable, and including:

- inputs (11A, 11B, 11C) for receiving, from each of the designation peripherals, when said designation peripheral is connected to said recomposer, data normally received by the central unit (90) when said designation peripheral is directly connected to said central unit;

- at least one output (17) for emitting data to the central unit (90), when said recomposer is connected to said central unit;

- digital processing means (12, 13, 15, 13C, 14C, 16) configured to transform the data received at the inputs (11A, 11B, 11C) of the recomposer into data outputted (17) from the recomposer; said outputted data being compliant in content and in structure to data which would be emitted by a designation peripheral including a single active surface (16U);

said outputted data (17) characterising individually, at each instant, on the single active surface (16U), actions carried out with the designation peripherals (A, B, C), actions **characterised by** the data received as inputs (11A, 11B, 11C), said recomposer being **characterised in that**:

the digital processing means include:

- at least one analyser (13, 13C) configured to extract, from the data received as inputs (11A, 11B, 11C) from each of the designation peripherals connected to said recomposer, a table of variable data and descriptors of said designation peripheral; at least one configurator (16) configured to define dimensions and position of an active surface (16A, 16B, 16C) associated with each of the designation peripherals connected to said recomposer in a coordinate system of the single active surface (16U);

- at least one controller (12) for transforming variable data of the data received as inputs (11A, 11B, 11C) into variable data of the outputted data (17);

- at least one conditioner (15) configured to structure the data to be outputted (17) in accordance with a communication protocol understood by the central unit (90) to which the recomposer (10) must be connected;

and **in that**:

the configurator (16), for each active surface (16A, 16B, 16C) associated with a designation peripheral connected to the recomposer, defines dimensions and a position in the single active surface (16U) of an area (16A', 16B', 16C') corresponding to said active surface associated with the designation peripheral by:

- a scaling of an abscissa axis and of an ordinate axis of each active surface known in a coordinate system of said active surface to a coordinate system of the single active surface (16U);
- a position of a reference point of each active surface in the coordinate system of the single active surface (16U).

**2.** - The recomposer according to claim 1, wherein coordinates of a point designated on an active surface (16A, 16B, 16C) in the coordinate system of a designation peripheral (A, B, C) transmitted in the variable data received on an input (11A, 11B, 11C) of the recomposer, or produced by the recomposer from the received variable data, are transformed into coordinates of said point designated on the active surface, in the coordinate system of the single active surface (16U), and incorporated into the variable data of the data emitted by the output (17).

**3.** - The recomposer according to one of claims 1 or 2, configured to receive, on at least one input (11A, 11B), data conforming to the requirements of an open standard, for example the USB standard and the HID overlay to said USB standard.

**4.** - The recomposer according to one of claims 1 to 3, configured to receive, on at least one input (11C), data defined by a closed protocol called "proprietary" protocol.

**5.** - The recomposer according to one of claims 1 to 4, wherein the outputted data (17) conform to the requirements of an open standard, for example the USB standard and the HID overlay to said USB standard.

**6.** - The recomposer according to one of claims 1 to 5, wherein at least one input (11C) corresponds to a wireless link to which a wireless designation peripheral (C) can connect, for example by a radio link or by an optical link.

**7.** - An assembly including a recomposer (10) according to one of claims 1 to 6 and including at least two designation peripherals (A, B, C).

**8.** - The assembly according to claim 7, wherein at least one designation peripheral (A, B) includes an active surface (16A, 16B) associated with a touch screen.

**9.** - The assembly according to claim 7 or claim 8, wherein at least one designation peripheral (C) is a stylus associated with an active surface.

**10.** - The assembly according to one of claims 7 to 9, wherein at least one designation peripheral is a scrolling device whose signals are processed to define a position on an active surface.

11. - A computer system including an assembly in accordance with one of claims 7 to 10, wherein the output (17) of the recomposer (10) is connected to a central unit (90) of said computer system.

12. - A method allowing connecting several designation peripherals (A, B, C) to the same central unit (90) in a computer system (100), and making said designation peripherals simultaneously usable, including the steps of connecting said designation peripherals on inputs of a recomposer (10) according to one of claims 1 to 6 and to connect an output of said recomposer to the central unit (90) so that said designation peripherals connected to said recomposer are seen by said central unit as a single designation peripheral with an active surface.

13. - The method according to claim 12, including a step of parameterising the recomposer (10), said parameterisation step consisting in defining an arrangement of active surfaces (16A, 16B, 16C), associated with each of the connected designation peripherals (A, B, C), in the single active surface (16U).

**Fig.1**

**Fig.2**

**Fig.3**

**Fig.4**

50

11A,11B,11C

51

54

52

53

17

**Fig.5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102013202818 A1
- US 2009319099 A1
- CN 102314253 A
- DE 102014206745 A1
- US 20120038561 A1